# EUROPEAN PATENT APPLICATION

(11) **EP 4 790 035 A1**
(43) Date of publication of application: **12.08.2026**
(21) Application number: 24884703.0
(22) Date of filing: 29.10.2024
(51) Int. Cl.: C03C 17/36, C03C 17/06, C03C 27/12, B60J 7/00, B32B 17/06, B32B 7/12, B32B 33/00

(54) **LOW-EMISSIVITY COATED GLASS, LAMINATED GLASS AND VEHICLE**

(30) Priority: 30.10.2023 CN 202311420012
(71) Applicant: Fujian Wanda Automobile Glass Industry Co., Ltd., Fuqing Fuzhou, Fujian 350300 (CN)
(72) Inventor: LU, Yuemin, Fuzhou, Fujian 350300 (CN); SHEN, Junlong, Fuzhou, Fujian 350300 (CN); LIN, Jun, Fuzhou, Fujian 350300 (CN); ZHANG, Canzhong, Fuzhou, Fujian 350300 (CN)
(74) Representative: Hoffmann Eitle
(86) International application number: PCT/CN2024/127979
(87) International publication number: WO 2025/092700

(57) **Abstract**

The present application relates to low-emissivity coated glass, laminated glass, and a vehicle. The low-emissivity coated glass (100) comprises a first glass substrate (101) and a coating layer arranged on at least one surface of the first glass substrate (101), wherein the coating layer comprises at least two infrared reflection metal layers and at least one metal absorption layer (109), which are arranged in a stacked manner, the metal absorption layer (109) is arranged on the side of all the infrared reflection metal layers distant from the first glass substrate (101), and the geometric thickness of the metal absorption layer (109) is greater than or equal to 7 nm.

## Description

### RELATED APPLICATIONS

This application claims priority to Chinese patent application No. 2023114200125, entitled "LOW-EMISSIVITY COATED GLASS, LAMINATED GLASS AND VEHICLE" filed on October, 30, 2023, the content of which is hereby incorporated herein by reference in its entirety.

### TECHNICAL FIELD

The present application relates to the field of functional glass, and in particular to a low-emissivity coated glass, a laminated glass, and a vehicle.

### BACKGROUND

Currently, sunroof glass used in transportation vehicles achieves heat insulation by coating the inner surface of the outer glass of laminated glass with an infrared reflective film containing multiple layers of silver metal. As sunroof glass, the visible light transmittance is typically required to be relatively low, for example, usually less than 20% or less than 10%. To meet the transmittance requirements of the laminated glass, tinted PVB with low light transmittance is generally used as an intermediate adhesive layer in the laminated glass. However, such tinted PVB with low light transmittance is usually expensive, which increases the production cost of the laminated glass to a certain extent.

In conventional technology, to enable cost reduction by using transparent PVB as the adhesive layer of laminated glass, various low-emissivity coated glasses have been disclosed. However, when conventional low-emissivity coated glass is applied to laminated glass, further reducing the visible light transmittance typically results in undesirable color and increases the reflectivity of the laminated glass, thereby degrading the heat insulation performance of the laminated glass.

### SUMMARY

In view of this, embodiments of the present application provide a low-emissivity coated glass, a laminated glass including the low-emissivity coated glass, and a vehicle.

A low-emissivity coated glass includes a first glass substrate and a coating layer disposed on at least one surface of the first glass substrate, wherein the coating layer includes at least two infrared reflective metal layers and at least one metallic absorbing layer that are stacked, the metallic absorbing layer is disposed on a side of all the infrared reflective metal layers away from the first glass substrate;
wherein a geometric thickness of the metallic absorbing layer is greater than or equal to 7 nm.

In some embodiments, the coating layer includes an inner dielectric layer, a first infrared reflective metal layer, a first intermediate dielectric layer, a second infrared reflective metal layer, a second intermediate dielectric layer, the metallic absorbing layer, and an outer dielectric layer that are stacked in sequence. The inner dielectric layer is more adjacent to the first glass substrate than the outer dielectric layer.

In some embodiments, a material of the metallic absorbing layer includes one selected from the group consisting of W, Ni, Cr, Ti, Nb, Mo, Si, and Zr, or an alloy of any combination thereof.

In some embodiments, the material of the metallic absorbing layer includes one selected from the group consisting of W, Ti, and NiCr.

In some embodiments, a total geometric thickness of the metallic absorbing layer disposed on the side of all the infrared reflective metal layers away from the first glass substrate is greater than or equal to 7 nm and less than or equal to 50 nm.

In some embodiments, the metallic absorbing layer includes a first metal layer adjacent to the first glass substrate and a second metal layer farther from the first glass substrate than the first metal layer.

In some embodiments, a geometric thickness of the first metal layer is greater than or equal to 2 nm.

In some embodiments, a geometric thickness of the second metal layer is greater than or equal to 5 nm.

In some embodiments, a third intermediate dielectric layer is further disposed between the first metal layer and the second metal layer.

In some embodiments, a geometric thickness of the third intermediate dielectric layer is in a range from 20 nm to 80 nm.

In some embodiments, a material of the third intermediate dielectric layer includes an oxide of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta.

In some embodiments, a material of each infrared reflective metal layer independently includes any one of Ag, Au, Cu, Al, Pt, Pd, Mo, and In, or an alloy of any combination thereof.

In some embodiments, the material of each infrared reflective metal layer comprises Ag.

In some embodiments, a geometric thickness of each infrared reflective metal layer is independently in a range from 5 nm to 20 nm.

In some embodiments, a material of the inner dielectric layer includes one or more oxides of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta.

In some embodiments, a geometric thickness of the inner dielectric layer is in a range from 15 nm to 50 nm.

In some embodiments, a geometric thickness of the first intermediate dielectric layer is in a range from 40 nm to 100 nm.

In some embodiments, a material of the first intermediate dielectric layer includes one or more oxides of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta.

In some embodiments, a material of the second intermediate dielectric layer includes one or more oxides of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta.

In some embodiments, the material of the second intermediate dielectric layer includes SiNx.

In some embodiments, a geometric thickness of the second intermediate dielectric layer is in a range from 10 nm to 100 nm.

In some embodiments, a geometric thickness of the outer dielectric layer is greater than or equal to 5 nm.

In some embodiments, a material of the outer dielectric layer includes one or more of a nitride and an oxynitride of at least one element selected from the group consisting of Si, Al, Zr, Ti, and B.

In some embodiments, the material of the outer dielectric layer includes SiN_{X}.

In some embodiments, the coating layer further includes a first barrier layer and/or a second barrier layer. The first barrier layer is disposed between the first infrared reflective metal layer and the first intermediate dielectric layer. A geometric thickness of the first barrier layer is in a range from 0.5 nm to 10 nm. A material of the first barrier layer includes one or more of a metal, an alloy, an oxide, and a nitride of at least one element selected from the group consisting of Ni, Cr, Ti, Zn, Nb, Hf, Zr, and Al.

The second barrier layer is disposed between the second infrared reflective metal layer and the second intermediate dielectric layer. A geometric thickness of the second barrier layer is in a range from 0.5 nm to 10 nm. A material of the second barrier layer includes one or more of a metal, an alloy, an oxide, and a nitride of at least one element selected from the group consisting of Ni, Cr, Ti, Zn, Nb, Hf, Zr, and Al.

A laminated glass includes the above-described low-emissivity coated glass, an adhesive layer, and a second glass substrate. The adhesive layer is disposed between the coating layer and the second glass substrate and is located on a surface of the coating layer away from the first glass substrate.

In some embodiments, a visible light transmittance of the first glass substrate is greater than or equal to 70%, a visible light transmittance of the second glass substrate is less than or equal to 50%, and a visible light transmittance of the adhesive layer is greater than or equal to 70%.

In some embodiments, a visible light transmittance of the laminated glass is less than or equal to 10%.

In some embodiments, a visible light reflectance of the laminated glass is less than or equal to 20%.

In some embodiments, a total solar transmittance of the laminated glass is less than or equal to 25%.

In some embodiments, in a Lab color space of a color reflected by a surface of the laminated glass, a value of a color component "L" is in a range from 0 to 60, a value of a color component "a" is in a range from -5 to 0, and a value of a color component "b" is in a range from -15 to 0.

A vehicle includes the above-described laminated glass.

Details of one or more embodiments of the present application are set forth in the accompanying drawings and description below. Other features, objectives, and advantages of the present application will become apparent from the description, drawings, and claims.

### BRIEF DESCRIPTION OF THE DRAWINGS

In order to illustrate the technical solutions in the embodiments of the present application or in the conventional technology more clearly, the drawings used in the embodiments or in the conventional technology will be described briefly. Apparently, the following described drawings are merely for the embodiments of the present application, and other drawings can be derived by those of ordinary skill in the art based on the disclosed drawings without any creative effort.
FIG. 1 is a schematic structural view of a low-emissivity coated glass according to some embodiments of the present application.
FIG. 2 is schematic structural view of another low-emissivity coated glass according to some embodiments of the present application.
FIG. 3 is a schematic structural view of a laminated glass according to some embodiments of the present application.
FIG. 4 is schematic structural view of another laminated glass according to some embodiments of the present application.

### Reference signs:

laminated glass 10, low-emissivity coated glass 100, first glass substrate 101, inner dielectric layer 102, first infrared reflective metal layer 103, first barrier layer 104, first intermediate dielectric layer 105, second infrared reflective metal layer 106, second barrier layer 107, second intermediate dielectric layer 108, metallic absorbing layer 109, first metal layer 1092, second metal layer 1094, outer dielectric layer 110, third intermediate dielectric layer 111, adhesive layer 200, second glass substrate 300.

### DETAILED DESCRIPTION

The technical solutions of the embodiments of the present application will be described more clearly and comprehensively below in conjunction with the accompanying drawings for the embodiments of the present application. Apparently, the embodiments described herein are only part of, not all of the embodiments of the present application. Base on the embodiments of the present application, other embodiments obtained by those of ordinary skill in the art without creative efforts shall fall within the protection scope of the present application.

Unless defined otherwise, all technical and scientific terms used herein have the same meaning as commonly understood by those skilled in the art of the present application. The terms used in the specification of the present application are for the purpose of describing examples only and are not intended to limit the present application.

Unless otherwise stated or there is a contradiction, terms or phrases used in the present application have the following meanings.

The term "and/or" used herein includes any and all combinations of one or more of the associated listed items.

In the present application, the terms "first", "second", and the like are used solely for descriptive purposes, and cannot be construed as indicating or implying a relative importance, or implicitly specifying the number of the indicated technical features. Thus, the quantity of the feature defined with "first" or "second" may explicitly or implicitly be at least one.

In the description of the present application, "a plurality of" means at least two, for example, two, three, or more, unless otherwise defined explicitly and specifically.

In the present application, when a numerical range is disclosed, the range shall be considered continuous and shall include the minimum and maximum values of the range, as well as every value between the minimum and maximum values. Further, when the range refers to integers, every integer between the minimum and maximum values of the range are included. In addition, when multiple ranges are provided to describe a feature or characteristic, these ranges can be combined. In other words, unless otherwise indicated, all ranges disclosed in the present application should be understood to encompass any and all subranges included therein.

The representations of the materials of individual film layers mentioned in the present application are not limited to the chemical formulas themselves; and they can refer to the main elemental components contained in each film layer, or abbreviations of the main components. For example, "SiN_{X}" can refer to Si₃N₄, and "ZnSnO_{X}" can refer to ZnSnO₄, etc, which is not limited in the present application.

A first aspect of the present application provides a low-emissivity coated glass with a relatively low visible light transmittance and a relatively high infrared reflectivity, which includes a first glass substrate and a coating layer disposed on at least one surface of the first glass substrate. The coating layer includes at least two infrared reflective metal layers and at least one metallic absorbing layer that are stacked. The metallic absorbing layer is disposed on a side of all the infrared reflective metal layers away from the first glass substrate.

A geometric thickness of the metallic absorbing layer is greater than or equal to 7 nm.

The above low-emissivity coated glass includes a first glass substrate and a coating layer disposed on at least one surface of the first glass substrate. The coating layer includes at least two infrared reflective metal layers and at least one metallic absorbing layer that are stacked. By disposing the metallic absorbing layer on the side of all the infrared reflective metal layers away from the first glass substrate, and by adjusting the thickness of the metallic absorbing layer, the laminated glass obtained from the above low-emissivity coated glass can still achieve indicators including a relatively low visible light transmittance, a relatively low visible light reflectance, a relatively low total solar transmittance, and aesthetically pleasing color without using a PVB adhesive layer having a low transmittance.

It can be understood that, unless otherwise specified, the geometric thickness herein refers to the physical thickness of the film layer, and the product of the geometric thickness and the refractive index of the film layer is referred to as the optical thickness.

It can be understood that, the coating layer can include two, three, or more infrared reflective metal layers, and the metallic absorbing layer is disposed on the side of all the infrared reflective metal layers away from the first glass substrate.

In some embodiments, two infrared reflective metal layers are provided, and the metallic absorbing layer is disposed on the side of the two infrared reflective metal layers away from the first glass substrate.

In some embodiments, the geometric thickness of the metallic absorbing layer is greater than or equal to 7 nm. For example, the geometric thickness of the metallic absorbing layer can be, but is not limited to, 7 nm, 8 nm, 9 nm, 10 nm, 11 nm, 12 nm, 13 nm, 14 nm, 15 nm, 16 nm, 17 nm, 18 nm, 19 nm, 20 nm, or a range formed by any two of these values. In some embodiments, the geometric thickness of the metallic absorbing layer is greater than or equal to 10 nm. In some embodiments, the total geometric thickness of the metallic absorbing layer is less than or equal to 50 nm.

In some embodiments, the material of the metallic absorbing layer includes one of W, Ni, Cr, Ti, Nb, Mo, Si, and Zr, or an alloy of any combination thereof. In some embodiments, the material of the metallic absorbing layer includes one of W, Ti, and NiCr.

In some embodiments, the metallic absorbing layer has a single-layer structure. In some other embodiments, the metallic absorbing layer has a double-layer structure, including a first metal layer adjacent to the first glass substrate and a second metal layer farther from the first glass substrate than the first metal layer. The geometric thickness of the first metal layer is greater than or equal to 2 nm, and the geometric thickness of the second metal layer is greater than or equal to 5 nm. An intermediate dielectric layer is further disposed between the first metal layer and the second metal layer. By configuring the metallic absorbing layer as a double-layer structure, the visible light transmittance of the coated glass can be further reduced while ensuring a relatively high infrared reflectivity.

In some embodiments, the material of each infrared reflective metal layer independently includes any one of Ag, Au, Cu, Al, Pt, Pd, Mo, and In, or an alloy of any combination thereof. It can be understood that the materials of the respective infrared reflective metal layers can be the same or different. In some embodiments, the materials of the respective infrared reflective metal layers are the same.

In one embodiment, the material of each infrared reflective metal layer includes Ag.

In some embodiments, the geometric thickness of each infrared reflective metal layer is independently in a range from 5 nm to 20 nm. For example, the geometric thickness of each infrared reflective metal layer can be, but is not limited to, 5 nm, 6 nm, 8 nm, 10 nm, 12 nm, 14 nm, 15 nm, 16 nm, 18 nm, 20 nm, or a range formed by any two of these values.

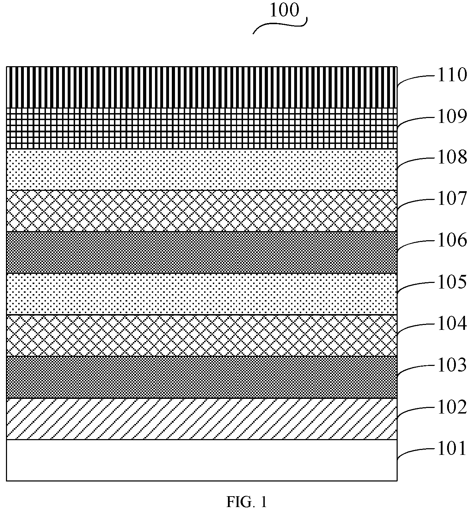

In some embodiments, referring to FIG. 1, a low-emissivity coated glass 100 includes a first glass substrate 101 and a coating layer disposed on at least one surface of the first glass substrate 101. The coating layer includes an inner dielectric layer 102, a first infrared reflective metal layer 103, a first intermediate dielectric layer 105, a second infrared reflective metal layer 106, a second intermediate dielectric layer 108, a metallic absorbing layer 109, and an outer dielectric layer 110 that are stacked in sequence.

The geometric thickness of the metallic absorbing layer 109 is greater than or equal to 7 nm.

It can be understood that, in the present application, the expression of "stacked in sequence" merely indicates the stacking order among the layers, but is not limited to only contain the layers. Other layers can also be stacked between these layers.

In some embodiments, the geometric thickness of the inner dielectric layer 102 is in a range from 15 nm to 50 nm. For example, the geometric thickness of the inner dielectric layer 102 can be, but is not limited to, 15 nm, 20 nm, 25 nm, 30 nm, 35 nm, 40 nm, 45 nm, 50 nm, or a range formed by any two of these values.

In some embodiments, the material of the inner dielectric layer 102 includes one or more oxides of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta.

In some embodiments, the material of the inner dielectric layer 102 includes one or more selected from the group consisting of ZnSnO_{X}, SiN_{X}, and an aluminum-doped zinc oxide (AZO). In some embodiments, the inner dielectric layer 102 includes a first inner layer composed of ZnSnO_{X} or SiN_{X} and a second inner layer composed of AZO, wherein the first inner layer is more adjacent to the first glass substrate than the second inner layer.

In an embodiment, the geometric thickness of the first inner layer is in a range from 15 nm to 35 nm, and the geometric thickness of the second inner layer is in a range from 10 nm to 25 nm. For example, the geometric thickness of the first inner layer can be, but is not limited to, 15 nm, 16 nm, 18 nm, 20 nm, 22 nm, 24 nm, 25 nm, 26 nm, 28 nm, 30 nm, 32 nm, 34 nm, 35 nm, or a range formed by any two of these values. The geometric thickness of the second inner layer can be, but is not limited to, 10 nm, 12 nm, 14 nm, 15 nm, 16 nm, 18 nm, 20 nm, 22 nm, 24 nm, 25 nm, or a range formed by any two of these values. It can be understood that, the above embodiment merely provides one example of the structure of the inner dielectric layer 102, and the inner dielectric layer 102 is not limited to the above structure.

In some embodiments, the material of the inner dielectric layer 102 includes AZO. The AZO-type materials function to block oxygen, thereby protecting the infrared reflective metal layer, such as a silver layer, while enhancing adhesion between the film layers. In addition, AZO can provide favorable structural properties, facilitating the growth of the infrared reflective metal layer such as a silver layer.

In some embodiments, the material of the first infrared reflective metal layer 103 includes any one selected from the group consisting of Ag, Au, Cu, Al, Pt, Pd, Mo, and In, or an alloy of any combination thereof. In an embodiment, the material of the first infrared reflective metal layer 103 includes Ag.

In some embodiments, the geometric thickness of the first infrared reflective metal layer 103 is in a range from 5 nm to 20 nm. For example, the geometric thickness of the first infrared reflective metal layer 103 can be, but is not limited to, 5 nm, 6 nm, 8 nm, 10 nm, 12 nm, 14 nm, 15 nm, 16 nm, 18 nm, 20 nm, or a range formed by any two of these values.

In some embodiments, the geometric thickness of the first intermediate dielectric layer 105 is in a range from 40 nm to 100 nm. For example, the geometric thickness of the first intermediate dielectric layer 105 can be, but is not limited to, 40 nm, 45 nm, 50 nm, 52 nm, 54 nm, 55 nm, 56 nm, 58 nm, 60 nm, 62 nm, 64 nm, 65 nm, 66 nm, 70 nm, 75 nm, 80 nm, 85 nm, 90 nm, 95 nm, 100 nm, or a range formed by any two of these values.

In some embodiments, the material of the first intermediate dielectric layer 105 includes one or more oxides of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta.

In some embodiments, the material of the first intermediate dielectric layer 105 includes one or more selected from the group consisting of ZnSnO_{X}, SiN_{X}, and AZO. In some embodiments, the first intermediate dielectric layer 105 includes a first intermediate layer composed of ZnSnO_{X}, or SiN_{X}, and a second intermediate layer composed of AZO, wherein the first intermediate layer is more adjacent to the first glass substrate 101 than the second intermediate layer. The geometric thickness of the first intermediate layer is in a range from 40 nm to 60 nm. The geometric thickness of the second intermediate layer is in a range from 10 nm to 30 nm. For example, the geometric thickness of the first intermediate layer can be, but is not limited to, 40 nm, 42 nm, 44 nm, 45 nm, 46 nm, 48 nm, 50 nm, 52 nm, 54 nm, 55 nm, 56 nm, 58 nm, 60 nm, or a range formed by any two of these values. The geometric thickness of the second intermediate layer can be, but is not limited to, 10 nm, 12 nm, 14 nm, 15 nm, 16 nm, 18 nm, 20 nm, 22 nm, 24 nm, 25 nm, 26 nm, 28 nm, 30 nm, or a range formed by any two of these values.

It can be understood that, the above embodiment merely provides one example of the structure of the first intermediate dielectric layer 105, but is not limited thereto.

In some embodiments, the material of the second infrared reflective metal layer 106 includes any one of Ag, Au, Cu, Al, Pt, Pd, Mo, and In, or an alloy of any combination thereof. In one embodiment, the material of the second infrared reflective metal layer 106 includes Ag.

In some embodiments, the geometric thickness of the second infrared reflective metal layer 106 is in a range from 5 nm to 20 nm. For example, the geometric thickness of the second infrared reflective metal layer 106 can be, but is not limited to, 5 nm, 6 nm, 8 nm, 10 nm, 12 nm, 14 nm, 15 nm, 16 nm, 18 nm, 20 nm, or a range formed by any two of these values.

It can be understood that, the material of the second infrared reflective metal layer 106 can be the same as or different from that of the first infrared reflective metal layer 103. In an embodiment, the material of the second infrared reflective metal layer 106 is the same as that of the first infrared reflective metal layer 103.

In some embodiments, the geometric thickness of the second intermediate dielectric layer 108 is in a range from 10 nm to 100 nm. For example, the geometric thickness of the second intermediate dielectric layer 108 can be, but is not limited to, 15 nm, 20 nm, 30 nm, 40 nm, 45 nm, 50 nm, 55 nm, 60 nm, 62 nm, 65 nm, 70 nm, 75 nm, 80 nm, 85 nm, 90 nm, 95 nm, 100 nm, or a range formed by any two of these values.

In some embodiments, for example as shown in FIG. 1, the metallic absorbing layer 109 has a single-layer structure. The geometric thickness of the second intermediate dielectric layer 108 is in a range from 20 nm to 100 nm. In an example, the geometric thickness of the second intermediate dielectric layer 108 is in a range from 30 nm to 80 nm.

In some embodiments, the material of the second intermediate dielectric layer 108 includes an oxide of at least one element selected from the group consisting of Zn, Si, Sn, Ti, Nb, Zr, Hf, Mg, Ni, In, Al, Ga, W, and Bi; or includes one or more of a nitride or an oxynitride of at least one element selected from the group consisting of Si, Al, Zr, Ti, Y, Hf, Nb, and Ta. In some embodiments, the material of the second intermediate dielectric layer 108 includes SiN_{X}.

In some embodiments, the material of the metallic absorbing layer 109 includes one selected from the group consisting of W, Ni, Cr, Ti, Nb, Mo, Si, and Zr, or an alloy of any combination thereof. In some embodiments, the material of the metallic absorbing layer 109 includes one selected from the group consisting of W, Ti, and NiCr.

In some embodiments, the geometric thickness of the metallic absorbing layer 109 is greater than or equal to 7 nm. For example, the geometric thickness of the metallic absorbing layer 109 can be, but is not limited to, 7 nm, 8 nm, 9 nm, 10 nm, 11 nm, 12 nm, 13 nm, 14 nm, 15 nm, 16 nm, 17 nm, 18 nm, 19 nm, 20 nm, 22 nm, 25 nm, 30 nm, 40 nm, 50 nm, or a range formed by any two of these values. In some embodiments, the geometric thickness of the metallic absorbing layer 109 is greater than or equal to 10 nm. In some embodiments, the total geometric thickness of the metallic absorbing layer 109 is less than or equal to 50 nm.

In some embodiments, the outer dielectric layer 110 is located farthest from the surface of the first glass substrate 101. The material of the outer dielectric layer 110 includes one or more of a nitride and an oxynitride of at least one element selected from the group consisting of Si, Al, Zr, Ti, and B. In some embodiments, the material of the outer dielectric layer 110 includes SiN_{X}.

In some embodiments, the geometric thickness of the outer dielectric layer 110 is greater than or equal to 5 nm. For example, the geometric thickness of the outer dielectric layer 110 can be, but is not limited to, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, or a range formed by any two of these values.

In some embodiments, the coating layer further includes a first barrier layer 104 and/or a second barrier layer 107.

The first barrier layer 104 is located between the first infrared reflective metal layer 103 and the first intermediate dielectric layer 105. The geometric thickness of the first barrier layer 104 is in a range from 0.5 nm to 10 nm. The material of the first barrier layer 104 includes one or more of a metal, an alloy, an oxide, and a nitride of at least one element selected from the group consisting of Ni, Cr, Ti, Zn, Nb, Hf, Zr, and Al.

It can be understood that, the oxide includes both a completely oxidized form and a partially oxidized form. Similarly, the nitride includes both a completely nitrided form and a partially nitrided form. In some embodiments, the material of the first barrier layer 104 includes AZO.

The second barrier layer 107 is located between the second infrared reflective metal layer 106 and the second intermediate dielectric layer 108. The geometric thickness of the second barrier layer 107 is in a range from 0.5 nm to 10 nm. The material of the second barrier layer 107 includes one or more of a metal, an alloy, an oxide, or a nitride of at least one element selected from the group consisting of Ni, Cr, Ti, Zn, Nb, Hf, Zr, and Al. In some embodiments, the material of the second barrier layer 107 includes AZO.

Optionally, the geometric thickness of the first barrier layer 104 can be, but is not limited to, 0.5 nm, 1 nm, 2 nm, 3 nm, 4 nm, 5 nm, 6 nm, 7 nm, 8 nm, 9 nm, 10 nm, or a range formed by any two of these values.

Optionally, the geometric thickness of the second barrier layer 107 can be, but is not limited to, 0.5 nm, 1 nm, 2 nm, 3 nm, 4 nm, 5 nm, 6 nm, 7 nm, 8 nm, 9 nm, 10 nm, or a range formed by any two of these values.

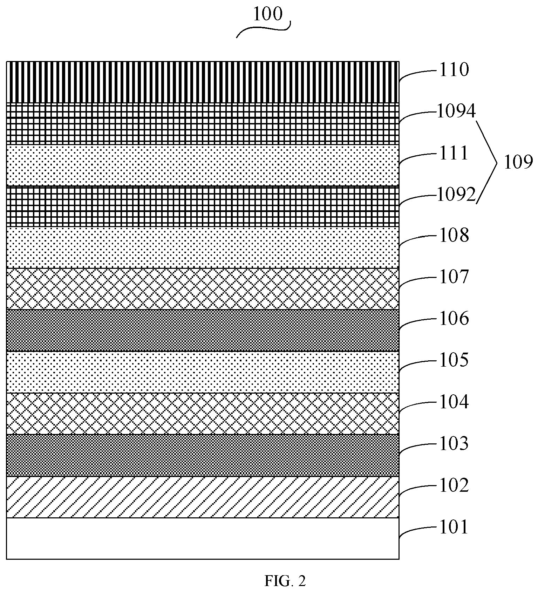

In FIG. 1, the metallic absorbing layer 109 has a single-layer structure. In some other embodiments, the metallic absorbing layer 109 has a double-layer structure. Referring to FIG. 2. The metallic absorbing layer 109 includes a first metal layer 1092 and a second metal layer 1094, and a third intermediate dielectric layer 111 is further disposed between the first metal layer 1092 and the second metal layer 1094. In FIG. 2, the low-emissivity coated glass 100 includes a first glass substrate 101 and a coating layer disposed on at least one surface of the first glass substrate 101. The coating layer includes an inner dielectric layer 102, a first infrared reflective metal layer 103, a first intermediate dielectric layer 105, a second infrared reflective metal layer 106, a second intermediate dielectric layer 108, a first metal layer 1092, a third intermediate dielectric layer 111, a second metal layer 1094, and an outer dielectric layer 110 that are stacked in sequence.

In some embodiments, the material of the first metal layer 1092 includes one of W, Ni, Cr, Ti, Nb, Mo, Si, and Zr, or an alloy of any combination thereof. In some embodiments, the material of the first metal layer 1092 includes W, Ti, or NiCr.

In some embodiments, the geometric thickness of the first metal layer 1092 is greater than or equal to 2 nm. The first metal layer 1092 is located above all infrared reflective metal layers, i.e., located between the second infrared reflective metal layer 106 and the outer dielectric layer 110. For example, the geometric thickness of the first metal layer 1092 can be, but is not limited to, 2 nm, 3 nm, 4 nm, 5 nm, 6 nm, 7 nm, 8 nm, 9 nm, 10 nm, 12 nm, 14 nm, 15 nm, 18 nm, 20 nm, or a range formed by any two of these values. Optionally, the geometric thickness of the first metal layer 1092 is in a range from 2 nm to 20 nm, from 2 nm to 15 nm, from 2 nm to 12 nm, from 2 nm to 10 nm, from 4 nm to 20 nm, from 4 nm to 15 nm, from 4 nm to 12 nm, from 4 nm to 10 nm, etc.

In some embodiments, the geometric thickness of the third intermediate dielectric layer 111 is in a range from 20 nm to 80 nm. For example, the geometric thickness of the third intermediate dielectric layer 111 can be, but is not limited to, 20 nm, 25 nm, 30 nm, 35 nm, 40 nm, 45 nm, 50 nm, 55 nm, 60 nm, 65 nm, 70 nm, 75 nm, 80 nm, or a range formed by any two of these values.

In some embodiments, the material of the third intermediate dielectric layer 111 includes an oxide of at least one element selected from the group consisting of Zn, Si, Sn, Ti, Nb, Zr, Hf, Mg, Ni, In, Al, Ga, W, and Bi; or includes one or more of a nitride and an oxynitride of at least one element selected from the group consisting of Si, Al, Zr, Ti, Y, Hf, Nb, and Ta. Optionally, the material of the third intermediate dielectric layer 111 includes SiN_{X}.

In some embodiments, the material of the second metal layer 1094 includes one selected from the group consisting of W, Ni, Cr, Ti, Nb, Mo, Si, and Zr, or an alloy of any combination thereof. In an embodiment, the material of the second metal layer 1094 includes one selected from the group consisting of W, Ti, and NiCr.

In some embodiments, the geometric thickness of the second metal layer 1094 is greater than or equal to 5 nm. For example, the geometric thickness of the second metal layer 1094 can be, but is not limited to, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, or a range formed by any two of these values. In an example, the geometric thickness of the second metal layer 1094 is in a range from 7 nm to 20 nm.

By configuring the metallic absorbing layer 109 as a double-layer structure, the visible light transmittance of the coated glass can be further reduced, while ensuring a relatively high infrared reflectivity.

In FIG. 2, the inner dielectric layer 102, the first infrared reflective metal layer 103, the second infrared reflective metal layer 106, the first intermediate dielectric layer 105, the second intermediate dielectric layer 108, the outer dielectric layer 110, the first barrier layer 104, and the second barrier layer 107 are the same as those described previously and will not be repeated here.

In some embodiments, in FIG. 2, the metallic absorbing layer 109 has a two-layer structure, and the geometric thickness of the second intermediate dielectric layer 108 is in a range from 10 nm to 40 nm. In an example, the geometric thickness of the second intermediate dielectric layer 108 is in a range from 15 nm to 30 nm.

The conventional technology discloses a low-emissivity coated glass having low light transmittance and high infrared reflectivity. In this coated glass, the barrier layer in direct contact with the infrared reflective metal Ag layer employs a metallic absorbing layer NiCr with certain light-absorbing performance, i.e., forming a low-emissivity coating with an SiNₓ/NiCr/Ag/NiCr/SiNₓ/NiCr/Ag/NiCr/SiNₓ layer stack. Furthermore, the geometric thickness of the NiCr layer is adjusted to reduce the visible light transmittance, typically with the visible light transmittance ranging from 50% to 60%. However, when this technical solution is applied to laminated glass, the following issues arise: (1) When the visible light transmittance is further reduced to less than or equal to 30%, as the geometric thickness of the NiCr layer increases, unfavorable color and reflectivity may occur in the laminated glass; (2) Since the NiCr layer is in direct contact with the infrared reflective metal Ag layer, further increasing the geometric thickness of the NiCr layer directly affects the infrared reflection performance of the low-emissivity (low-E) coating, thereby reducing the thermal insulation performance of the laminated glass; (3) As the geometric thickness of the NiCr layer increases, the coating layer may suffer from a relatively high haze after heat treatment at 500°C to 650°C.

In conventional technology, using a nickel-chromium layer as a layer in contact with the Ag layer can improve chemical, mechanical, and environmental durability, compared with using a zinc oxide layer as a lower contact layer beneath the silver layer and/or a highly oxidized nickel-chromium layer as an upper contact layer on the silver layer. Additionally, the nickel-chromium layer can also serve as a metallic absorbing layer.

However, it is found in the present application that disposing the metallic absorbing layer above the two silver layers can yield better physicochemical parameters and unexpected technical effects. In some embodiments of the present application, the low-emissivity coated glass 100 has the metallic absorbing layer 109 disposed on the side of all infrared reflective metal layers away from the first glass substrate 101, with each film layer being designed and optimized. As a result, even without using a low-transmittance PVB adhesive layer, the laminated glass prepared from the above low-emissivity coated glass 100 still satisfies indictors including a relatively low visible light transmittance, a relatively low visible light reflectivity, a relatively low total solar transmittance, and aesthetically pleasing color characteristics.

A second aspect of the present application provides a laminated glass, including the low-emissivity coated glass, an adhesive layer, and a second glass substrate, wherein the adhesive layer is disposed between the coating layer and the second glass substrate and is located on a surface of the coating layer away from the first glass substrate.

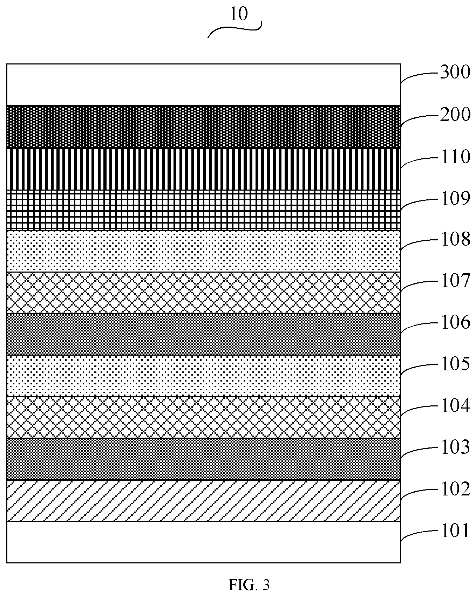

Referring to FIG. 3, in some embodiments, the laminated glass 10 includes a low-emissivity coated glass 100, an adhesive layer 200, and a second glass substrate 300. The adhesive layer 200 is disposed between the coating layer and the second glass substrate 300 and is located on the surface of the coating layer away from the first glass substrate 101. The low-emissivity coated glass 100 includes a first glass substrate 101 and a coating layer disposed on at least one surface of the first glass substrate 101. The coating layer includes an inner dielectric layer 102, a first infrared reflective metal layer 103, a first barrier layer 104, a first intermediate dielectric layer 105, a second infrared reflective metal layer 106, a second barrier layer 107, a second intermediate dielectric layer 108, a metallic absorbing layer 109, and an outer dielectric layer 110 that are stacked in sequence.

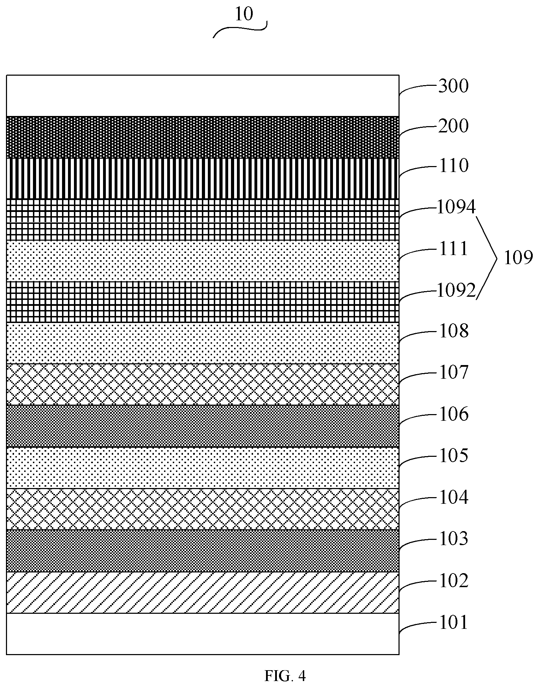

Referring to FIG. 4, in some other embodiments, the laminated glass 10 includes a low-emissivity coated glass 100, an adhesive layer 200, and a second glass substrate 300. The adhesive layer 200 is disposed between the coating layer and the second glass substrate 300 and is located on the surface of the coating layer away from the first glass substrate 101. The low-emissivity coated glass 100 includes a first glass substrate 101 and a coating layer disposed on at least one surface of the first glass substrate 101. The coating layer includes an inner dielectric layer 102, a first infrared reflective metal layer 103, a first barrier layer 104, a first intermediate dielectric layer 105, a second infrared reflective metal layer 106, a second barrier layer 107, a second intermediate dielectric layer 108, a first metal layer 1092, a third intermediate dielectric layer 111, a second metal layer 1094, and an outer dielectric layer 110 that are stacked in sequence.

In some embodiments, the first glass substrate 101 and/or the second glass substrate 300 are transparent glass. The visible light transmittance of the transparent glass is greater than or equal to 70%. For example, the transparent glass can be, but is not limited to, clear float glass.

In some other embodiments, the first glass substrate 101 and/or the second glass substrate 300 are tinted glass. The visible light transmittance of the tinted glass is less than or equal to 50%. For example, the tinted glass can be, but is not limited to, grey glass.

In some embodiments, the first glass substrate 101 is transparent glass and the second glass substrate 300 is tinted glass. In an example, the visible light transmittance of the first glass substrate 101 is greater than or equal to 70%, and the visible light transmittance of the second glass substrate 300 is less than or equal to 50%.

In some embodiments, the adhesive layer 200 can be a colorless transparent or colored low-transmittance polymer layer. In some embodiments, the material of the adhesive layer 200 includes polyvinyl butyral (PVB), polyurethane (PU), ethylene-vinyl acetate copolymer (EVA), ionoplast interlayer (SGP), or any combination thereof.

In some embodiments, the visible light transmittance of the adhesive layer 200 is less than or equal to 30%. For example, the adhesive layer 200 includes a grey PVB adhesive layer. The visible light transmittance of the grey PVB adhesive layer is 10 ±2%. In some other embodiments, the visible light transmittance of the adhesive layer 200 is greater than or equal to 70%. For example, the adhesive layer 200 includes a transparent PVB adhesive layer. The visible light transmittance of the transparent PVB adhesive layer is greater than 90%.

In an example, the visible light transmittance of the adhesive layer 200 is greater than or equal to 70%. A high visible light transmittance of the adhesive layer 200 is advantageous for reducing costs.

In some embodiments, the visible light transmittance of the first glass substrate 101 is greater than or equal to 70%, the visible light transmittance of the second glass substrate 300 is less than or equal to 50%, and the visible light transmittance of the adhesive layer 200 is greater than or equal to 70%.

In some embodiments, the visible light transmittance of the laminated glass 10 is less than or equal to 10%. For example, the visible light transmittance of the laminated glass 10 can be, but is not limited to, 10%, 9.5%, 9%, 8.5%, 8%, 7.5%, 7%, 6.5%, 6%, or a range formed by any two of these values.

In some embodiments, the visible light reflectivity of the laminated glass 10 is less than or equal to 20%. For example, the visible light reflectivity of the laminated glass 10 can be, but is not limited to, 20%, 19%, 18%, 17%, 16%, 15%, 14%, 13%, 12%, 11%, 10%, 9%, 8%, or a range formed by any two of these values. In some other embodiments, the visible light reflectivity of the laminated glass 10 is less than or equal to 15%.

In some embodiments, the total solar transmittance of the laminated glass 10 is less than or equal to 25%. For example, the total solar transmittance of the laminated glass 10 can be, but is not limited to, 25%, 24%, 23%, 22%, 21%, 20%, 19%, 18%, 17%, 16%, 15%, 14%, 13%, 12%, 11%, 10%, or a range formed by any two of these values. In some embodiments, the total solar transmittance of the laminated glass 10 is less than or equal to 20%.

In some embodiments, the color reflected by the surface of the laminated glass 10 is characterized using the CIE Lab color space, where the L dimension represents lightness, and a and b represent color-opponent dimensions. The color component a represents the green-to-red component, and the color component b represents the blue-to-yellow component. In the present application, the value of the color component L is in a range from 0 to 60, the value of the color component a is in a range from -5 to 0, and the value of the color component b is in a range from -15 to 0. For example, the value of the color component L can be, but is not limited to, 0, 5, 10, 15, 20, 25, 30, 32, 34, 35, 36, 38, 40, 42, 44, 45, 46, 48, 50, 55, 60, or a range formed by any two of these values. The value of the color component a can be, but is not limited to, -5, -4, -3, -2, -1, 0, or a range formed by any two of these values. The value of the color component b can be, but is not limited to, -15, -12, -10, -8, -6, -5, -4, -2, 0, or a range formed by any two of these values. In addition, in some embodiments, the value of the color component L is in a range from 30 to 50, the value of the color component a is in a range from -4 to -1, and the value of the color component b is in a range from -13 to -5.

It can be understood that, in some embodiments, when the laminated glass 10 is used as automotive window glass, the first glass substrate 101 refers to the glass substrate in the laminated glass 10 that is adjacent to the exterior air, also referred to as the outer glass substrate, and the second glass substrate 300 refers to the glass substrate in the laminated glass 10 that is adjacent to the interior air, also referred to as the inner glass substrate. The "outer surface of the glass substrate" refers to the interface of the laminated glass 10 that is in contact with the air, and the "inner surface of the glass substrate" refers to the interface of the laminated glass 10 that is in contact with the adhesive layer 200.

The above laminated glass 10, even when using a lower-cost transparent adhesive layer 200, can still satisfy the indicators including a low visible light transmittance, a low visible light reflectivity, a low total solar transmittance, and aesthetically pleasing color.

A third aspect of the present application provides a vehicle including the laminated glass as described above.

It can be understood that the laminated glass can be used as sunroof glass, side window glass, etc., in the vehicle.

It can be understood that other components in the vehicle can be those commonly used in the art, and will not be described herein.

To make the objectives and advantages of the present application clearer, the low-emissivity coated glass of the present application and its effects are further described in detail below in conjunction with specific examples. It should be understood that the specific examples described herein are merely used to explain the present application and are not intended to limit the present application. Unless otherwise specified, the following examples do not include other components besides unavoidable impurities. The drugs and instruments used in the examples are conventional choices in the art unless otherwise specified. Experimental methods in the examples for which no specific conditions are indicated are carried out under conventional conditions, such as those described in the literature, books, or methods recommended by the manufacturer.

### Comparative Example 1

Comparative Example 1 provides a laminated glass, including an outer glass substrate and an inner glass substrate. Both the outer glass substrate and the inner glass substrate were clear float glass with a geometrical thickness of 2.1 mm. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with ZnSnO_{X} 30 nm/AZO 10 nm/Ag 10 nm/AZO 10 nm/ZnSnOₓ 55 nm/AZO 10 nm/Ag 11 nm/AZO 10 nm/ZnSnOₓ 15 nm/SiNₓ 10 nm that were stacked in sequence. The coated outer glass substrate and the inner glass substrate were both subjected to heat treatment at 550 °C to 650 °C. The outer glass substrate and inner glass substrate were then bonded using a grey PVB adhesive layer with a transmittance of 10±2%.

### Comparative Example 2

Comparative Example 2 provides a laminated glass, including an outer glass substrate and an inner glass substrate. Both the outer glass substrate and the inner glass substrate were clear float glass with a geometrical thickness of 2.1 mm. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with SiN_{X} 20 nm/AZO 10 nm/Ag 11nm/NiCr 8 nm/SiNₓ 65 nm/AZO 20 nm/Ag 10 nm/NiCr 5 nm/AZO 12 nm/SiNₓ 22 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Comparative Example 3

Comparative Example 3 provides a laminated glass, including an outer glass substrate and an inner glass substrate. Both the outer glass substrate and the inner glass substrate were clear float glass with a geometrical thickness of 2.1 mm. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with SiN_{X} 15 nm/AZO 10 nm/Ag 12 nm/NiCr 12 nm/SiNₓ 65 nm/AZO 20 nm/Ag 11 nm/NiCr 12 nm/AZO 12 nm/SiNₓ 22 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Comparative Example 4

Comparative Example 4 provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with SiN_{X} 20 nm/AZO 10 nm/Ag 11 nm/NiCr 8 nm/SiNₓ 65 nm/AZO 20 nm/Ag 10 nm/NiCr 5 nm/AZO 12 nm/SiNₓ 22 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Example 1

This Example provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with ZnSnO_{X} 25 nm/AZO 15 nm/Ag 10 nm/AZO 10 nm/ZnSnOₓ 48 nm/AZO 16 nm/Ag 11 nm/AZO 10 nm/SiNₓ 62 nm/W 15 nm/SiNₓ 10 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Example 2

This Example provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with ZnSnO_{X} 25 nm/AZO 15 nm/Ag 10 nm/AZO 10 nm/ZnSnOₓ 48 nm/AZO 16 nm/Ag 11 nm/AZO 10 nm/SiNₓ 62 nm/NiCr 15 nm/SiNₓ 10 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Example 3

This Example provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with ZnSnO_{X} 25 nm/AZO 17 nm/Ag 10 nm/AZO 10 nm/ZnSnOₓ 46 nm/AZO 16 nm/Ag 11 nm/AZO 10 nm/SiNₓ 65 nm/Ti 19 nm/SiNₓ 12 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Example 4

This Example provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with SiN_{X} 30 nm/AZO 15 nm/Ag 10 nm/AZO 10 nm/SiNₓ 52 nm/AZO 18 nm/Ag 11 nm/AZO 10 nm/SiNₓ 15 nm/W 5 nm/SiNₓ 55 nm/W 7 nm/SiNₓ 10 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Example 5

This Example provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with SiN_{X} 30 nm/AZO 15 nm/Ag 10 nm/AZO 10 nm/SiNₓ 54 nm/AZO 18 nm/Ag 11 nm/AZO 10 nm/SiNₓ 15 nm/NiCr 8 nm/SiNₓ 52 nm/NiCr 10.5 nm/SiNₓ 13 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

### Example 6

This Example provides a laminated glass, including an outer glass substrate and an inner glass substrate. The outer glass substrate was clear float glass with a geometrical thickness of 2.1 mm, while the inner glass substrate was gray glass with a geometrical thickness of 2.1 mm and a transmittance of 25% to 30%. An infrared reflective low-emissivity film was coated on the inner surface of the outer glass substrate by magnetron sputtering. In the direction away from the inner surface of the outer glass substrate, starting from the inner surface of the outer glass substrate, the outer glass substrate was coated with SiN_{X} 30 nm/AZO 15 nm/Ag 10 nm/AZO 10 nm/SiNₓ 54 nm/AZO 18 nm/Ag 11 nm/AZO 10 nm/SiNₓ 15 nm/Ti 8 nm/SiNₓ 52 nm/Ti 14 nm/SiNₓ 13 nm that were stacked in sequence. The coated outer glass substrate and the inner glass substrate were both subjected to heat treatment at 550 °C to 650 °C. The outer glass substrate and the inner glass substrate were then bonded using a transparent PVB adhesive layer with a transmittance of greater than or equal to 90%.

The characterization data of the laminated glass in the above examples and comparative examples are shown in Table 1 and Table 2 below.

**Table 1 Performance data of the laminated glass in Comparative Examples 1 to 4 and Example 1**

| | Comparative Example 1 | Comparative Example 2 | Comparative Example 3 | Comparative Example 4 | Example 1 | |
|---|---|---|---|---|---|---|
| Outer glass substrate | 2.1 mm of clear float glass | | | | | |
| Coating layer | | ZnSnO_{X} 30nm/ AZO10 nm/ Ag 10nm/ AZO 10nm/ ZnSnO_{X} 55nm/ AZO 10nm/ Ag 11nm/ AZO 10nm/ ZnSnO_{X} 15nm/ SiN_{X} 10nm | SiN_{X} 20nm/ AZO 10nm/ Ag 11nm/ NiCr 8nm/ SiN_{X} 65nm/ AZO 20nm/ Ag 10nm/ NiCr 5nm/ AZO 12nm/ SiN_{X} 22nm | SiN_{X} 15nm/ AZO 10nm/ Ag 12nm/ NiCr 12nm/ SiN_{X} 65nm/ AZO 20nm/ Ag 11nm/ NiCr 12nm/ AZO 12nm/ SiN_{X} 22nm | SiN_{X} 20nm/ AZO 10nm/ Ag 11nm/ NiCr 8nm/ SiN_{X} 65nm/ AZO 20nm/ Ag 10nm/ NiCr 5nm/ AZO 12nm/ SiN_{X} 22nm | ZnSnO_{X} 25nm/ AZO 15nm/ Ag 10nm/ AZO 10nm/ ZnSnO_{X} 48nm/ AZO 16nm/ Ag 11nm/ AZO 10nm/ SiN_{X} 62nm/ W 15nm/ SiN_{X} 10nm |
| Adhesive layer | | 10%±2% gray PVB | Transparent PVB | Transparent PVB | Transparent PVB | Transparent PVB |
| Inner glass substrate | | 2.1 mm clear float glass | 2.1 mm clear float glass | 2.1 mm clear float glass | 2.1 mm gray glass | 2.1 mm gray glass |
| Visible light transmittance Tl of laminated glass | | 7.80% | 29.20% | 14.80% | 8.2% | 7.5% |
| Visible light reflectivity Rl (based on outer surface) | | 7.40% | 23.50% | 32.60% | 23.2% | 12.1% |
| Lab value of color reflected by laminated glass | L | 35.6 | 60.5 | 62.5 | 60.5 | 41.2 |
| | a | -2.8 | -4.5 | -2.5 | -5.6 | -3.2 |
| | b | -10.8 | -12.8 | -15.8 | -7.8 | -10.5 |
| Total solar transmittance (TTs) | | 19.5% | 25.8% | 21.5% | 19.9% | 19.2% |

As can be seen from Comparative Examples 1 to 4 in Table 1, Comparative Example 1 represents a conventional laminated glass having two heat reflective silver films without a metallic absorbing layer, which typically requires a low-transmittance PVB adhesive layer for bonding to allow the laminated glass to have relatively low visible light transmittance, relatively low visible light reflectivity (<15%), and relatively low total solar transmittance (≤20%). However, the low-transmittance PVB adhesive layer is generally more expensive than transparent PVB, resulting in increased costs.

In Comparative Example 2, the laminated glass uses a combination of two clear float glasses (transparent glass) and transparent PVB. The coating layer in Comparative Example 2 employs nickel-chromium alloy (NiCr) as the metallic absorbing layers, with one NiCr layer disposed between the two Ag layers, which can reduce the visible light transmittance of both the coated glass and the laminated glass to some extent, but the visible light reflectivity Rl is excessively high, reaching 23.50%.

In Comparative Example 3, the glass configuration was the same as that in Comparative Example 2, and the total geometric thickness of the metallic absorbing layer is further increased. This can further reduce the visible light transmittance and total solar transmittance of the laminated glass to a certain extent. However, as the geometric thickness of the metallic absorbing layer increases, it is evident that the visible light reflectivity Rl also increases, causing a certain light pollution, which is detrimental to the appearance of the laminated glass. Moreover, in the Lab color space of the color reflected by the laminated glass, the value of the color component "b" is less than -15, which causes the overall color reflected by the glass to appear bluish.

In Comparative Example 4, the laminated glass uses a combination of clear float glass (transparent glass), grey glass (tinted glass), and transparent PVB. The coating layer of the laminated glass contains a metallic absorbing layer, and the inner glass substrate of the laminated glass is replaced with low-transmittance grey glass, which allows the visible light transmittance and total solar transmittance of the laminated glass to approach the performance levels of the conventional laminated glass in Comparative Example 1 that uses grey PVB. However, the visible light reflectivity in Comparative Example 4 remains relatively high. Moreover, in the Lab color space of the color reflected by the laminated glass, the value of the color component "a" is less than -5, which causes the overall color reflected by the glass to appear greenish.

In Example 1, the glass configuration was the same as that in Comparative Example 4, and the metallic absorbing layer was disposed on the side of all infrared reflective metal layers away from the first glass substrate. Without using low-transmittance grey PVB, the visible light reflectivity Rl can be significantly reduced compared with Comparative Example 4, and the visible light transmittance is also lower than those of Comparative Examples 1 to 4. Moreover, the other performance indicators of the laminated glass in Example 1 are substantially comparable to those of Comparative Example 1. Thus, while satisfying the requirements of low visible light transmittance, low visible light reflectivity, low total solar transmittance, and aesthetically pleasing color, Example 1 achieves superior cost control.

**Table 2 Performance data of the laminated glass in Examples 1 to 6**

| | Example 1 | Example 2 | Example 3 | Example 4 | Example 5 | Example 6 | |
|---|---|---|---|---|---|---|---|
| Outer glass substrate | 2.1 mm of clear float glass | | | | | | |
| Coating layer | ZnSnO_{X} 25nm/ AZO 15nm/ Ag 10nm/ AZO 10nm/ ZnSnO_{X} 48nm/ AZO 16nm/ Ag 11nm/ AZO 10nm/ SiN_{X} 62nm/ W 15nm/ SiN_{X} 10nm | ZnSnO_{X} 25nm/ AZO 15nm/ Ag 10nm/ AZO 10nm/ ZnSnO_{X} 48nm/ AZO 16nm/ Ag 11nm/ AZO 10nm/ SiN_{X} 62nm/ NiCr 15nm/ SiN_{X} 10nm | ZnSnO_{X} 25nm/ AZO 17nm/ Ag 10nm/ AZO 10nm/ ZnSnO_{X} 46nm/ AZO 16nm/ Ag 11nm/ AZO 10nm/ SiN_{X} 65nm/ Ti 19nm/ SiN_{X} 12nm | SiN_{X} 30nm/ AZO 15nm/ Ag 10nm/ AZO 10nm/ SiN_{X} 52nm/ AZO 18nm/ Ag 11nm/ AZO 10nm/ SiN_{X} 15nm/ W 5nm/ SiN_{X} 55nm/ W 7nm/ SiN_{X} 10nm | SiN_{X} 30nm/ AZO 15nm/ Ag 10nm/ AZO 10nm/ SiN_{X} 54nm /AZO 18nm /Ag 11nm/ AZO 10nm/ SiN_{X} 15nm/ NiCr 8nm/ SiN_{X} 52nm/ NiCr 10.5nm/ SiN_{X} 13nm | SiN_{X} 30nm/ AZO 15nm/ Ag 10nm/ AZO 10nm/ SiN_{X} 54nm/ AZO 18nm/ Ag 11nm/ AZO 10nm/ SiN_{X} 15nm/ Ti 8nm/ SiN_{X} 52nm/ Ti 14nm/ SiN_{X} 13nm | |
| Adhesive layer | Transparent PVB | | | | | | |
| Inner glass substrate | 2.1 mm of gray glass | | | | | | |
| Visible light transmittance of laminated glass | 7.5% | 7.9% | 8.5% | 7.2% | 7.5% | 8.3% | |
| Visible light reflectivity (based on outer surface) | | 12.1% | 12.5% | 11.80% | 10.6% | 11.3% | 10.2% |
| Lab value of color reflected by laminated glass | L | 41.2 | 43.1 | 42.5 | 37.5 | 38.7 | 37.8 |
| | a | -3.2 | -2.8 | -3.5 | -2.5 | -2.2 | -1.02 |
| | b | -10.5 | -11.8 | -12.3 | -8.8 | -10.5 | -10.8 |
| Total solar transmittance (TTs) | | 19.2% | 18.9% | 19.8% | 19.1% | 18.8% | 19.6% |

As shown in Table 2, Examples 1 to 6 all adopt the same glass configuration as Comparative Example 4. Overall, the values of the performance parameters achieved based on the coating system in Examples 1 to 6 are all superior to those of Comparative Example 4. Without using low-transmittance grey PVB, Examples 1 to 6 achieve significantly lower visible light reflectivity Rl compared with Comparative Example 4, and lower visible light transmittance than those of Comparative Examples 1 to 4. Other performance levels remain substantially comparable to those of Comparative Example 1, achieving a better cost control while satisfying the requirements of relatively low visible light transmittance, relatively low visible light reflectivity, relatively low total solar transmittance, and attractive color appearance.

Examples 1 to 3 use a single metallic absorbing layer, leading to fewer films and a relatively lower process complexity during coating. The overall color reflected by the laminated glass in Examples 1 to 3 is more neutral compared with Comparative Examples 3 and 4. Thus, the technical solution involving a single metallic absorbing layer provides lower visible light reflectivity and lower visible light transmittance than the technical solution involving two metallic absorbing layers in Comparative Examples 3 and 4, while maintaining a more neutral color appearance.

In Table 2, Examples 4 to 6 employ a technical solution involving coating with two metallic absorbing layers. In contrast to Comparative Examples 3 and 4, the two metallic absorbing layers are both disposed on the side of all infrared reflective metal layers away from the first glass substrate. This coating layer configuration yields lower visible light reflectivity and lower visible light transmittance than the double-metallic absorbing layer design used in Comparative Examples 3 and 4. Additionally, Examples 4 to 6, which utilize a coating layer containing two metallic absorbing layers, show that the color components in Lab color space are all more adjacent to neutral color, thus exhibiting superior color performance.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A low-emissivity coated glass, comprising:
a first glass substrate; and
a coating layer disposed on at least one surface of the first glass substrate,
wherein the coating layer comprises at least two infrared reflective metal layers and at least one metallic absorbing layer that are stacked, and the metallic absorbing layer is disposed on a side of all the infrared reflective metal layers away from the first glass substrate; and
wherein a geometric thickness of the metallic absorbing layer is greater than or equal to 7 nm.

2. The low-emissivity coated glass according to claim 1, wherein the coating layer comprises an inner dielectric layer, a first infrared reflective metal layer, a first intermediate dielectric layer, a second infrared reflective metal layer, a second intermediate dielectric layer, the metallic absorbing layer, and an outer dielectric layer that are stacked in sequence, and the inner dielectric layer is more adjacent to the first glass substrate than the outer dielectric layer.

3. The low-emissivity coated glass according to claim 1 or 2, wherein the metallic absorbing layer satisfies one or more of following conditions:
(1) a material of the metallic absorbing layer comprises one selected from the group consisting of W, Ni, Cr, Ti, Nb, Mo, Si, and Zr, or an alloy of any combination thereof;
optionally, the material of the metallic absorbing layer comprises one selected from the group consisting of W, Ti, and NiCr;
(2) a total geometric thickness of the metallic absorbing layer disposed on the side of all the infrared reflective metal layers away from the first glass substrate is greater than or equal to 7 nm and less than or equal to 50 nm.

4. The low-emissivity coated glass according to any one of claims 1 to 3, wherein the metallic absorbing layer comprises a first metal layer adjacent to the first glass substrate and a second metal layer farther from the first glass substrate than the first metal layer, and the first metal layer and the second metal layer satisfy one or more of following conditions:
(1) a geometric thickness of the first metal layer is greater than or equal to 2 nm;
(2) a geometric thickness of the second metal layer is greater than or equal to 5 nm;
(3) a third intermediate dielectric layer is further provided between the first metal layer and the second metal layer;
optionally, a geometric thickness of the third intermediate dielectric layer is in a range from 20 nm to 80 nm;
optionally, a material of the third intermediate dielectric layer comprises an oxide of at least one element selected from the group consisting of Zn, Si, Sn, Ti, Nb, Zr, Hf, Mg, Ni, In, Al, Ga, W, and Bi; or comprises one or more of a nitride and an oxynitride of at least one element selected from the group consisting of Si, Al, Zr, Ti, Y, Hf, Nb, and Ta.

5. The low-emissivity coated glass according to any one of claims 1 to 4, wherein the infrared reflective metal layers satisfy one or more of following conditions:
(1) a material of each infrared reflective metal layer independently comprises any one selected from the group consisting of Ag, Au, Cu, Al, Pt, Pd, Mo, and In, or an alloy of any combination thereof;
optionally, the material of each infrared reflective metal layer comprises Ag;
(2) a geometric thickness of each infrared reflective metal layer is independently in a range from 5 nm to 20 nm.

6. The low-emissivity coated glass according to claim 2, wherein the inner dielectric layer satisfies one or more of following conditions:
(1) a material of the inner dielectric layer comprises one or more oxides of at least one element selected from the group consisting of Zn, Si, Sn, Ti, Nb, Zr, Hf, Mg, Ni, In, Al, Ga, W, and Bi; or comprises one or more of a nitride and an oxynitride of at least one element selected from the group consisting of Si, Al, Zr, Ti, Y, Hf, Nb, and Ta;
(2) a geometric thickness of the inner dielectric layer is in a range from 15 nm to 50 nm.

7. The low-emissivity coated glass according to claim 2 or 6, wherein the first intermediate dielectric layer satisfies one or more of following conditions:
(1) a geometric thickness of the first intermediate dielectric layer is in a range from 40 nm to 100 nm;
(2) a material of the first intermediate dielectric layer comprises one or more oxides of at least one element selected from the group consisting of Zn, Si, Sn, Ti, Nb, Zr, Hf, Mg, Ni, In, Al, Ga, W, and Bi; or comprises one or more of a nitride and an oxynitride of at least one element selected from the group consisting of Si, Al, Zr, Ti, Y, Hf, Nb, and Ta.

8. The low-emissivity coated glass according to any one of claims 2, 6, and 7, wherein the second intermediate dielectric layer satisfies one or more of following conditions:
(1) a material of the second intermediate dielectric layer comprises one or more oxides of at least one element selected from the group consisting of Zn, Si, Sn, Ti, Nb, Zr, Hf, Mg, Ni, In, Al, Ga, W, and Bi; or comprises one or more of a nitride and an oxynitride of at least one element selected from the group consisting of Si, Al, Zr, Ti, Y, Hf, Nb, and Ta;
optionally, the material of the second intermediate dielectric layer comprises SiN_{X};
(2) a geometric thickness of the second intermediate dielectric layer is in a range from 10 nm to 100 nm.

9. The low-emissivity coated glass according to any one of claims 2 and 6 to 8, wherein the outer dielectric layer satisfies one or more of following conditions:
(1) a geometric thickness of the outer dielectric layer is greater than or equal to 5 nm;
(2) a material of the outer dielectric layer comprises one or more of a nitride and an oxynitride of at least one element selected from the group consisting of Si, Al, Zr, Ti, and B;
optionally, the material of the outer dielectric layer comprises SiN_{X}.

10. The low-emissivity coated glass according to any one of claims 2 and 6 to 9, wherein the coating layer further comprises a first barrier layer and/or a second barrier layer,
the first barrier layer is disposed between the first infrared reflective metal layer and the first intermediate dielectric layer, a geometric thickness of the first barrier layer is in a range from 0.5 nm to 10 nm, and a material of the first barrier layer comprises one or more of a metal, an alloy, an oxide, and a nitride of at least one element selected from the group consisting of Ni, Cr, Ti, Zn, Nb, Hf, Zr, and Al;
the second barrier layer is disposed between the second infrared reflective metal layer and the second intermediate dielectric layer, a geometric thickness of the second barrier layer is in a range from 0.5 nm to 10 nm, and a material of the second barrier layer comprises one or more of a metal, an alloy, an oxide, and a nitride of at least one element selected from the group consisting of Ni, Cr, Ti, Zn, Nb, Hf, Zr, and Al.

11. A laminated glass, comprising the low-emissivity coated glass according to any one of claims 1 to 10, an adhesive layer, and a second glass substrate,
wherein the adhesive layer is disposed between the coating layer and the second glass substrate and is located on a surface of the coating layer away from the first glass substrate.

12. The laminated glass according to claim 11, wherein a visible light transmittance of the first glass substrate is greater than or equal to 70%, a visible light transmittance of the second glass substrate is less than or equal to 50%, and a visible light transmittance of the adhesive layer is greater than or equal to 70%.

13. The laminated glass according to claim 11 or 12, wherein a visible light transmittance of the laminated glass is less than or equal to 10%.

14. The laminated glass according to any one of claims 11 to 13, wherein a visible light reflectance of the laminated glass is less than or equal to 20%.

15. The laminated glass according to any one of claims 11 to 14, wherein a total solar transmittance of the laminated glass is less than or equal to 25%.

16. The laminated glass according to any one of claims 11 to 15, wherein in a Lab color space of a color reflected by a surface of the laminated glass, a value of a color component "L" is in a range from 0 to 60, a value of a color component "a" is in a range from -5 to 0, and a value of a color component "b" is in a range from -15 to 0.

17. A vehicle comprising the laminated glass according to any one of claims 11 to 16.
